# EUROPÄISCHE PATENTSCHRIFT

(11) **EP 2 731 814 B1**
(45) Veröffentlichungstag und Bekanntmachung des Hinweises auf die Patenterteilung: **21.10.2015**
(21) Anmeldenummer: 12730500.1
(22) Anmeldetag: 25.06.2012
(51) Int. Cl.: B60J 10/02

(54) **SCHEIBENDICHTUNG MIT SPÜLWASSERFUNKTION**
WINDSCREEN SEAL WITH RINSE WATER FUNCTION
JOINT POUR PARE-BRISE AVEC FONCTION DE RINÇAGE

(30) Priorität: 14.07.2011 EP 11174045
(43) Veröffentlichungstag der Anmeldung: 21.05.2014
(73) Patentinhaber: Saint-Gobain Glass France, 92400 Courbevoie (FR)
(72) Erfinder: GERADS, Manfred, 52511 Geilenkirchen (DE)
(74) Vertreter: Lendvai, Tomas
(86) Internationale Anmeldenummer: PCT/EP2012/062211
(87) Internationale Veröffentlichungsnummer: WO 2013/007503

(56) Entgegenhaltungen:
- EP-A1- 0 587 477
- WO-A2-2009/060413
- DE-A1-102004 004 591
- FR-A1- 2 898 568
- GB-A- 2 192 023
- US-A1- 2002 108 695

## Beschreibung

Die Erfindung betrifft ein Verfahren zur Herstellung einer Scheibendichtung mit Spülwasserfunktion, eine Dichtung und eine Scheibe mit entsprechender Dichtung.

Die Herstellung von Dichtungen an verschiedenen Fahrzeugkomponenten besitzt in der Automobilindustrie einen hohen Stellenwert. Insbesondere Glasscheiben müssen vor dem Einbau in die dafür vorgesehenen Stellen der Karosserie mit Dichtelementen versehen werden. Häufig eingesetzte Dichtelemente umfassen Polymere wie Polyurethane, Polyolefine, Polysulfide, Polyepoxide und Kautschuk wie Naturkautschuk, Styrol-Butadien-Kautschuk, Butadien-Acrylnitril-Kautschuk, Ethylen-Propylen-Dien-Kautschuk, Silikone wie RTV (raumtemperturvernetzenden-Silikonkautschuk, HTV-(hochtemperturvernetzenden) Silikonkautschuk, peroxidischvernetzten-Silikonkautschuk und/oder additionsvernetzten-Silikonkautschuk, Polyacrylate und/oder Thermoplastische Elastomere. Diese Dichtelemente dienen dem Wassermanagement und können das Eindringen von Feuchtigkeit verhindern. Ferner wird dadurch die Entwicklung von störenden Fahrgeräuschen wie Pfeifgeräuschen im Fahrgastraum verhindert. Eine weitere wichtige Funktion ist das spannungsfreie, reproduzierbare und stabile Einsetzen der Glaselemente in die dafür vorgesehene Aussparung in der Karosserie des Fahrzeugs.

Eine etablierte Methode zur Herstellung von Dichtungen an Glasscheiben ist die Extrusion und das anschließende Aushärten einer Polymermasse, beispielsweise Polyurethan zu einem Profilstrang, bzw. das Abkühlen bei der Benutzung von thermoplastischen Materialien. Gegebenenfalls kann zur Vorbereitung auch ein Primer aufgetragen werden. Die Bildung des Profilstranges erfolgt auf molekularer Ebene, beispielsweise durch Lebende Polymerisation, Kettenpolymerisation, Polykondensation oder Polyaddition. Zur Verbesserung der elastischen Eigenschaften kann sich noch eine Polymervernetzung, beispielsweise durch Temperaturerhöhung, Luftfeuchtigkeit, Sauerstoffzugabe anschließen. Zum besseren Einbau in die Karosserie und zur Erhöhung der Stabilität und Dichtigkeit umfasst der Profilstrang in vielen Fällen noch Stützlippen (Dichtlippe, Zentrierung). Diese Lippen können über entsprechend geformte Extrusionsdüsen gleichzeitig mit dem eigentlichen Profilstrang hergestellt werden. Entsprechend der Scheibengeometrie kann die Lage, Größe und Form des Profilstranges und auch der Lippe variieren.

Eine wichtige weitere Komponente der Windschutzscheibe ist die Scheibenwaschanlage oder auch Wisch-Wasch-Anlage. In Abhängigkeit von ihrem Aufbau kann sie unterschiedlich große Teile der Windschutzscheibe verschmutzungs- oder regentropfenfrei halten. Die Sprühdüsen sind in der Regel im unteren Teil der Windschutzscheibe, bevorzugt im Bereich der Motorhaube angebracht.

DE 196 04 397 C1 offenbart eine Vorrichtung zum Anextrudieren eines rahmenförmigen Profilstranges an einer Glasscheibe. Die Extrusionsdüse weist einen verlängerten Lippenspalt auf, welcher am Ende durch einen Schieber abgedeckt werden kann.

DE 42 32 554 C1 offenbart ein Verfahren zur Herstellung einer mit einem angeformten Rahmen aus einem thermoplastischen Polymer versehenen Glasscheibe und eine entsprechende Vorrichtung. Die zu bearbeitende Glasscheibe wird dazu vor der eigentlichen Extrusion auf ein beheiztes Formbett abgelegt, welches die Glasscheibenränder überragt. Der erzeugte Profilstrang überragt die Glasscheibe entsprechend dem Formbett.

DE 39 30 414 A1 offenbart eine Glasscheibe mit profiliertem Rahmen, welcher durch Extrusion und Aushärten auf der Scheibe hergestellt wird.

EP 0 502 322 A1 offenbart eine beheizbare Scheibenwaschvorrichtung für die Windschutzscheibe eines Kraftfahrzeuges.

DE 44 10 701 A1 offenbart ein Luftstromgehäuse welches den Einsatz der Wisch-Wasch-Anlage nur bei starker Verschmutzung der Windschutzscheibe notwendig macht. Der Einsatz von Luftdüsen erlaubt die Vermeidung eines durch den Scheibenwischer verkleinerten, halbkreisförmigen Sichtfeldes.

FR 2 898 568 offenbart eine gattungsgemäße Scheibenwaschvorrichtung für die Windschutzcheibe eines kraftfahrzeuges.

Die Größe des durch die Scheibenwaschanlage benetzten Bereiches der Windschutzscheibe und die Reinigungsleistung der Waschanlage sind von verschiedenen Faktoren abhängig. Begrenzende Größen hierfür sind beispielsweise die Größe der Wischerblätter oder die Positionierung der Waschdüsen. Im Allgemeinen kann somit nicht die gesamte Windschutzscheibe gleichzeitig mit der Spülflüssigkeit benetzt werden. Die von der Spülflüssigkeit nicht erreichten Bereiche der Windschutzscheibe können zunehmend verschmutzen und die Sicht durch die Windschutzscheibe im Randbereich deutlich reduzieren. Eine reduzierte Sicht im Randbereich verschlechtert gleichzeitig die Sichtbarkeit von Gefahrenquellen am Straßenrand wie beispielsweise Hindernisse, Wildtiere oder Fußgänger.

Die Aufgabe der Erfindung liegt darin, eine Vorrichtung bereitzustellen, welche eine vollständige Benetzung und Reinigung der Windschutzscheibe mit Wasser oder einer geeigneten Spülflüssigkeit ermöglicht.

Die Aufgabe der vorliegenden Erfindung wird erfindungsgemäß durch eine Dichtung gemäß Anspruch 1 gelöst. Bevorzugte Ausführungen gehen aus den Unteransprüchen hervor.

Eine erfindungsgemäße Scheibe und ein Verfahren zur Herstellung einer erfindungsgemäßen Dichtung mit Spülfunktion sowie deren Verwendung gehen aus weiteren nebengeordneten Ansprüchen hervor.

Das erfindungsgemäße Verfahren zur Herstellung einer Scheibe mit einer Dichtung umfasst einen ersten Schritt indem eine Profilleiste bereitgestellt wird, die einen Spacer aufweist. Zuerst wird in die Profilleiste, umfassend einen Profilkörper mit einem durchgängigen Profilkörperkanal und eine mit dem Profilkörper verbundene Lippe, eine Lippenöffnung und ein Verbindungskanal zwischen der Lippenöffnung und dem Profilkörperkanal ausgestochen. Die daraus erhaltene Profilleiste wird an eine Scheibe extrudiert und anschließend der Profilkörperkanal mit einem Schlauch verbunden.

Die Lippenöffnung und der Verbindungskanal werden bevorzugt mit einem heißen Draht ausgestochen. Alternativ können die Lippenöffnung und der Verbindungskanal auch mit einem feinen Bohrer erzeugt werden. Das Ausstechen der Lippenöffnung und des entsprechenden Verbindungskanals erfolgt bevorzugt in einem Schritt über einen kontinuierlichen Stich in die Lippe bis zum Verbindungskanal.

Vor dem Extrudieren der Profilleiste wird bevorzugt ein Cleaner und/oder Primer auf der Scheibe aufgetragen. Der Primer verbessert die Haftung und Festigkeit zwischen dem Profilteil und der Glasoberfläche der Scheibe. Der Primer wird besonders bevorzugt in Form einer Lösung mit einem Filz oder Schwamm auf der zu beklebenden Oberfläche aufgetragen.

Die Temperatur beträgt bevorzugt zwischen 10 °C und 40 °C und die relative Luftfeuchtigkeit beträgt bevorzugt zwischen 20 % und 80 %. Die Ablüftzeit beträgt bevorzugt 30 s bis 3 Tage. Der Primer enthält besonders bevorzugt Polyisocyanate. Der Ausdruck "Cleaner" umfasst im Sinne der Erfindung Reinigungslösungen mit Tensiden, Lösungsmitteln und/oder Silanen. Die Tenside oder Lösungsmittel reinigen die Glasoberfläche, während Silane, insbesondere organische Silanderivate eine bessere Oberflächenhaftung des Primers und/oder der Profileiste ermöglichen. Silane, die über geeignete Abgangsgruppen wie Alkohole oder Halogene verfügen, können eine chemische Bindung mit der Si-OH Oberfläche des Glassubstrats eingehen. Beispiele für derartige Silane sind Alkyltrimethoxysilane und Alkyltriethoxysilane, beispielsweise Isooctyltrimethoxysilan (C₁₁H₂₆O₃Si /CAS no. [Chemical Abstracts Number] 34396-03-7), Octyltrimethoxysilan (C₁₁H₂₆O₃Si /CAS no. 3069-40-7), Octadecyltrimethoxysilan (C₂₁H₄₆O₃Si / CAS no. 3069-42-9), Octadecyltriethoxysilan (C₂₄H₅₂O₃Si / CAS no. 7399-00-0) und/oder Gemische davon.

Der Profilkörperkanal wird bevorzugt auf der dem Schlauch abgewandten Öffnung mit einem Stopfen verschlossen.

Die erfindungsgemäße Dichtung mit Sprühfunktion für Fahrzeugscheiben beinhaltet mindestens eine Profilleiste. Die Profilleiste umfasst mindestens einen Profilkörper und eine mit dem Profilkörper verbundene Lippe. Der Profilkörper enthält einen innen liegenden Profilkörperkanal. Auf der Lippe befinden sich Lippenöffnungen, welche über einen Verbindungskanal mit dem Profilkörperkanal verbunden sind. Der Verbindungskanal ermöglicht die Abgabe von Flüssigkeiten aus dem Profilkörperkanal in die Lippenöffnungen. Die Lippenöffnungen geben dann die Flüssigkeit, beispielsweise eine Kühl- oder Reinigungsflüssigkeit an angeschlossene Bauteile oder die Umgebung ab.

Der Profilkörperkanal innerhalb der Profilleiste weist einen Durchmesser von 1 mm bis 5 mm auf. Der Durchmesser kann in Abhängigkeit von der verwendeten Spülflüssigkeit und dem entsprechenden Wasserdruck gewählt werden.

Die Profilleiste weist einen maximalen Durchmesser von 5 mm bis 20 mm, besonders bevorzugt 10 mm bis 15 mm auf.

Die Profilleiste weist einen Spacer auf. Der Spacer verbessert die Abdichtung der Scheibe im Innenraum und reduziert die Geräusche, besonders Pfeifgeräusche im Innenraum des Fahrzeugs. Der Spacer kann unterschiedliche Formen und Geometrien aufweisen, welche sich bevorzugt nach der Ausdehnung des Zwischenraums zwischen der Scheibe und der Karosserie richten.

Die Profilleiste enthält bevorzugt Polyurethane, Polyolefine, Polysulfide, Polyepoxide und Kautschuk wie Naturkautschuk, Silikone wie RTV(raumtemperturvernetzenden-Silikonkautschuk, HTV-(hochtemperturvernetzenden) Silikonkautschuk, peroxidischvernetzten-Sihkonkautschuk und/oder additionsvernetzten-Silikonkautschuk, Polyacrylate und/oder Thermoplastische Elastomere.

Die Profilleiste enthält bevorzugt Thermoplastische Elastomere, besonders bevorzugt TPE-U (Thermoplastische Elastomere auf Polyurethanbasis), TPE-O (Thermoplastische Elastomere auf Olefinbasis), TPE-V (Thermoplastische Elastomere auf Olefinbasis, vernetzt), TPE-E (Thermoplastische Polyesterelastomere), TPE-A (Thermoplastische Copolyamide), TPE-S (Styrol-Blockcopolymere), Styrol-Butadien-Kautschuk, Butadien-Acrylnitril-Kautschuk, Ethylen-Propylen-Dien-Kautschuk, insbesondere bevorzugt Styrol/Butadien-Blockcopolymere (SBS).

Die Lippenöffnung weist bevorzugt einen Durchmesser von 0,5 mm bis 2 mm auf. Der Durchmesser richtet sich nach dem Wasserdruck der Spülflüssigkeit und der Spülwassermenge. Die Lippenöffnungen können in Abhängigkeit von der benötigten Spülwassermenge einen unterschiedlichen Durchmesser aufweisen, bevorzugt nimmt der Durchmesser vom Bereich der Motorhaube zum Dachbereich hin zu. In einer alternativen Ausführungsform weisen die Lippenöffnungen denselben Durchmesser auf. Der Durchmesser sollte nicht zu klein gewählt werden, da sonst die Spülflüssigkeit durch Salzablagerungen oder durch Verkalkung die Lippenöffnungen verstopfen könnte.

Die Erfindung umfasst des Weiteren eine am Rand einer Scheibe befestigte Dichtung wie vorstehend beschreiben. Die Scheibe enthält bevorzugt Flachglas, Floatglas, Quarzglas, Borosilikatglas, Kalk-Natron-Glas und/oder Gemische davon. Alternativ kann die Scheibe auch Polymere wie Polycarbonat oder Polymethylmethacrylat (Plexiglas) umfassen. Die Scheibe weist bevorzugt eine mittlere Transmission im Wellenlängenbereich von 300 nm bis 1300 nm von > 80 %, bevorzugt von > 90 % auf. Ein an der erfindungsgemäßen Dichtung befestigter Schlauch ermöglicht die Versorgung der Dichtung mit einer Spülflüssigkeit und damit eine Reinigung der Scheibenoberfläche.

Die Dichtung umschließt bevorzugt den gesamten Rand der Scheibe und ermöglicht eine vollständige Benetzung und Reinigung der Scheibe mit Spülflüssigkeit.

Der Schlauch ist bevorzugt mit einer Spülflüssigkeitssteuerung und einem Spülwassertank verbunden. Die Spülflüssigkeit enthält bevorzugt Wasser, nichtionische, ionische und amphotere Tenside, Duftstoffe und polare organische Lösemittel, beispielsweise Alkohole. Die Spülflüssigkeitssteuerung umfasst besonders bevorzugt eine steuer- und schaltbare Pumpe.

Die erfindungsgemäße Scheibe umfasst des Weiteren eine bevorzugt am unteren Rand der Scheibe befestigte Wisch-Wasch Vorrichtung. Der Ausdruck "unterer Rand" beschreibt den an den Motorraum eines Fahrzeuges angrenzenden Rand der Scheibe.

Die Erfindung umfasst des Weiteren die Verwendung der erfindungsgemäßen Dichtung in Scheiben von Fahrzeugen, Zügen, Schiffen, Hubschraubern und Flugzeugen. Die erfindungsgemäße Dichtung wird besonders bevorzugt in Kraftfahrzeugen und Lastkraftwagen als Randdichtung einer Windschutzscheibe verwendet.

Im Folgenden wird die Erfindung anhand von Zeichnungen näher erläutert. Die Zeichnung ist eine rein schematische Darstellung und nicht maßstabsgetreu. Sie schränkt die Erfindung in keiner Weise ein. Es zeigen:
Figur 1 einen Querschnitt der erfindungsgemäßen Profilleiste,
Figur 2 eine schematische Ansicht einer erfindungsgemäßen Scheibe mit angebrachter Profilleiste,
Figur 3 verschiedene Querschnitte A, B und C der erfindungsgemäßen Profilleiste,
Figur 4 eine schematische Ansicht einer bevorzugten Ausführungsform der erfindungemäßen Scheibe und
Figur 5 ein Fließschema des erfindungsgemäßen Verfahrens.

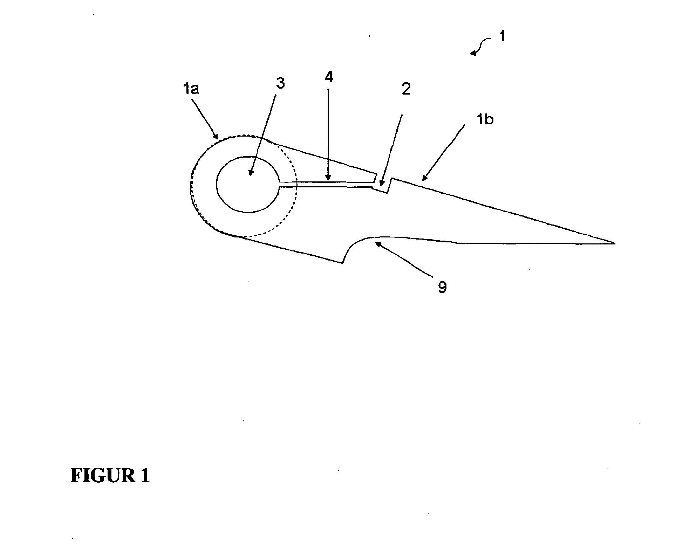

Figur 1 zeigt einen Querschnitt der erfindungsgemäßen Dichtung (I) mit Profilleiste (1). Die Profilleiste (1) umfasst einen Profilkörper (1a) welcher durch die gestrichelten Linien angedeutet ist. An den Profilkörper (1a) schließt sich die Lippe (1b) an. Die Form und Geometrie der Lippe (1b) richten sich im Wesentlichen nach der Geometrie eines nicht gezeigten Bauteils, an dem die Profilleiste (1) befestigt wird. In der erfindungsgemäßen Profilleiste (1) gehen der Profilkörper (1a) und die Lippe (1b) bevorzugt fließend ineinander über und werden bevorzugt gemeinsam über eine Düse extrudiert. Der Profilkörper (1a) umfasst einen Profilkörperkanal (3), der über einen Verbindungskanal (4) mit einer Lippenöffnung (2) verbunden ist. Extrusionsdüsen zum Extrudieren eines Hohlprofils wie dem Profilkörperkanal (3) sind dem Fachmann bekannt. Die Lippe (1b) umfasst bevorzugt mehrere, besonders bevorzugt 10 bis 50 Lippenöffnungen (2).

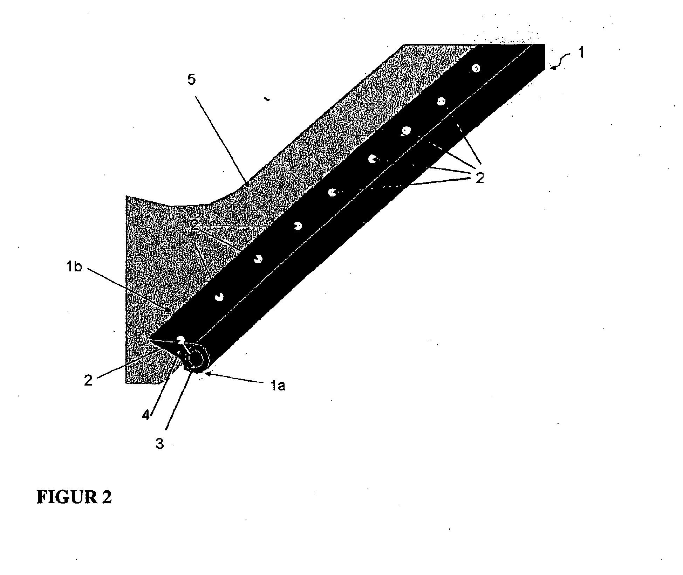

Figur 2 zeigt eine schematische Ansicht einer erfindungsgemäßen Scheibe (5) mit angebrachter Profilleiste (1). Die Scheibe (5) weist bevorzugt eine Dicke von 1 mm bis 6 mm auf. Die Scheibe (5) kann sowohl als Einfachverglasung als auch als Verbundverglasung ausgeführt sein. Die Profilleiste (1) ist am Rand der Scheibe (5) angebracht und dichtet mit der Lippe (1b) und dem Profilkörper (1a) den Raum zwischen der Scheibe (5) und einer nicht gezeigten Karosserie nach außen ab. Auf der Oberfläche der Lippe (1b) befindet sich eine Vielzahl von Lippenöffnungen (2), welche eine nicht gezeigte Spülflüssigkeit aus dem Profilkörperkanal (3) über den jeweiligen Verbindungskanal (4) auf die Außenseite der Scheibe (5) ausbringen.

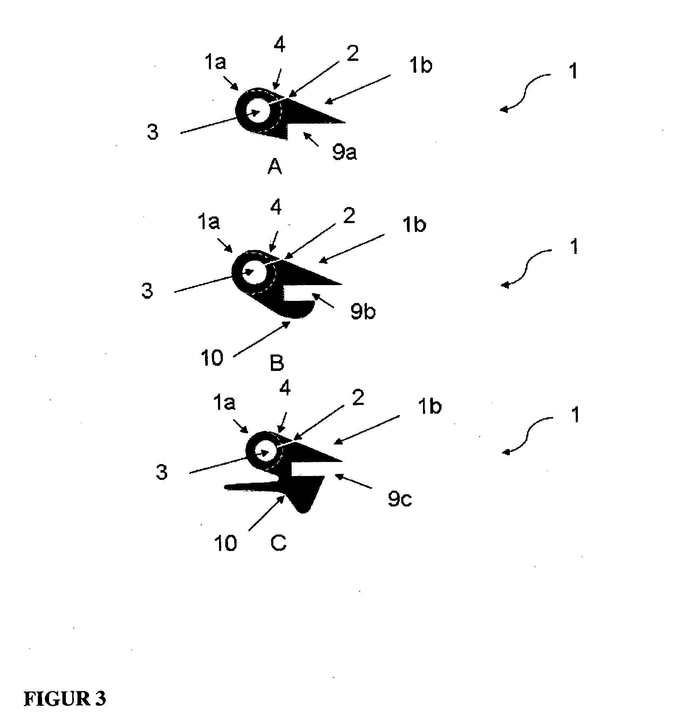

Figur 3 zeigt verschiedene Querschnitte der erfindungsgemäßen Profilleiste (1). Querschnitt A zeigt die Geometrie einer Dichtlippe (1b), welche beispielsweise an der Motorkante einer Windschutzscheibe (5) Anwendung findet. Der grundsätzliche Aufbau aus Profilkörper (1a), Profilkörperkanal (3), Lippe (1b), Lippenöffnung (2) und Verbindungskanal (4) entspricht dem in Figur 1 beschriebenen. Die Fläche (9a) zeigt die Auflagefläche der Lippe (1b) auf einer nicht gezeigten Scheibe (5), beispielsweise im Bereich der Motorkante. Der grundsätzliche Aufbau der Querschnitte B und C entspricht dem in Querschnitt A. Zusätzlich weist die Lippe (1b) noch einen Spacer (10) auf. Der Spacer (10) verbessert die Abdichtung der Profilleiste (1) und reduziert im Fahrgastraum eines Kraftfahrzeuges die Fahrgeräusche, beispielsweise Pfeifgeräusche. Die Lippe (1b) in Querschnitt B dichtet bevorzugt zu den Holmseiten der nicht gezeigten Scheibe (5) ab. Die Lippe (1b) in Querschnitt C dichtet bevorzugt zu der Dachkante der nicht gezeigten Scheibe (5) ab.

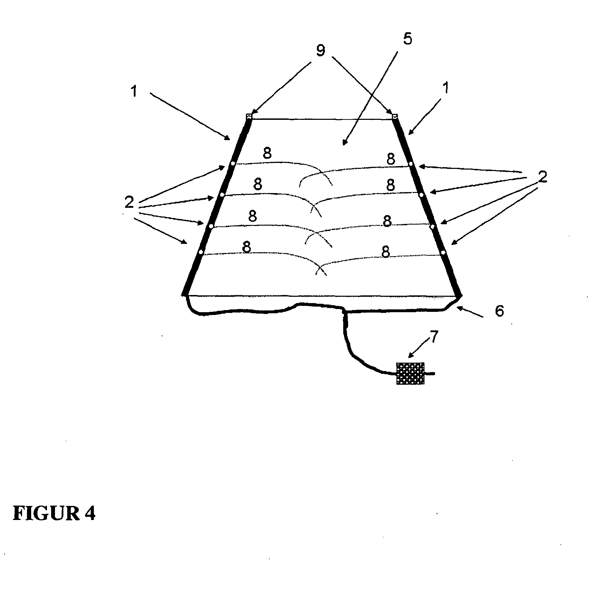

Figur 4 zeigt eine schematische Ansicht einer bevorzugten Ausführungsform der erfindungemäßen Scheibe (5). Am rechten und linken Rand der Scheibe (5) ist jeweils eine Profilleiste (1) angebracht. Ein Schlauch (6) verbindet die Profilleisten (1) über eine Spülflüssigkeitssteuerung (7) mit einer Spülflüssigkeit (8). Die Spülflüssigkeit (8) enthält bevorzugt Wasser, ionische, nichtionische oder amphotere Tenside, polare oder amphiphile Polymere und/oder Alkohole. Alternativ können besonders im Winter auch Frostschutzmittel wie Glycerin oder Ethylenglykol der Spülflüssigkeit (8) beigemischt werden. Über die Lippenöffnungen (2) kann die Spülflüssigkeit (8) großflächig auf die Scheibe (5) ausgebracht werden. Stopfen (9) dichten die Profilleiste (1) auf der dem Schlauch (6) gegenüberliegenden Seite ab. Ein nicht gezeigter Scheibenwischer kann bevorzugt die Spülflüssigkeit noch weiter auf der Scheibe (5) verteilen und feste Verschmutzungen mechanisch lösen.

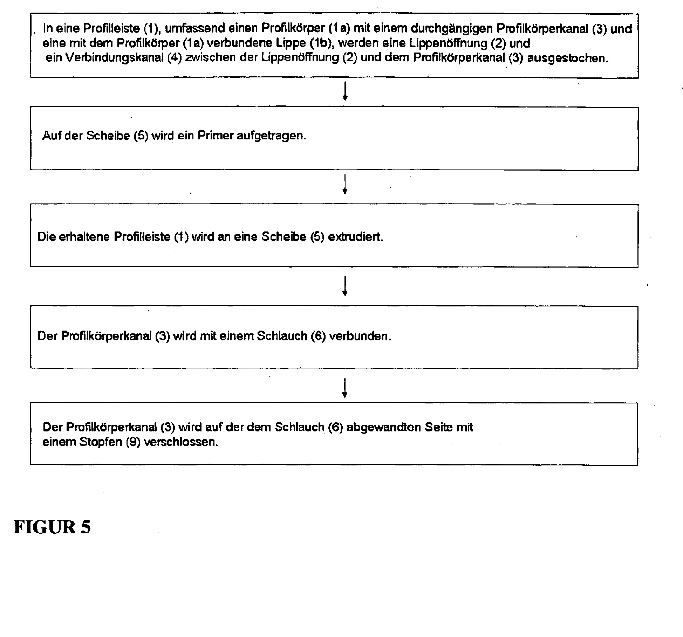

Figur 5 zeigt ein Fließschema einer bevorzugten Ausführungsform des erfindungsgemäßen Verfahrens. Zuerst werden in eine Profilleiste (1), umfassend einen Profilkörper (1a) mit einem durchgängigen Profilkörperkanal (3) und eine mit dem Profilkörper (1a) verbundene Lippe (1b), mehrere Lippenöffnungen (2) und entsprechende Verbindungskanäle (4) zwischen den Lippenöffnungen (2) und dem Profilkörperkanal (3) ausgestochen. In einem anschließenden oder parallelen Schritt wird auf eine Scheibe (5) auf der späteren Kontaktfläche mit der Lippe (1b) ein Primer aufgetragen. Die Profilleiste (1) wird anschließend an die Scheibe (5) extrudiert. Der Profilkörperkanal (3) wird in einem nächsten Schritt mit einem Schlauch (6) verbunden. Der Profilkörperkanal (3) wird anschließend auf der dem Schlauch (6) abgewandten Seite mit einem Stopfen (9), bevorzugt einem Stopfen aus TPE (Thermoplastischen Elastomer), PU (Polyurethan), PE (Polyethylen), PP (Polypropylen), PTFE (Polytetrafluorethylen) oder PEEK (Polyetheretherketon) verschlossen. Der Stopfen wird danach bevorzugt mit einem heißhärtenden oder feuchtigkeitshärtenden Klebstoff versiegelt. Ist die Scheibe (5) in einer alternativen Ausgestaltungsform vollständig von der Profilleiste (1) umgeben, so kann optional auf die Verwendung eines Stopfens (9) verzichtet werden.

### Bezugszeichenliste

- (I): Dichtung
- (1): Profilleiste
- (1a): Profilkörper
- (1b): Lippe
- (2): Lippenöffnung
- (3): Profilköperkanal
- (4): Verbindungskanal
- (5): Scheibe
- (6): Schlauch
- (7): Spülflüssigkeitssteuerung
- (8): Spülflüssigkeit
- (9): Stopfen
- (9a, 9b, 9c): Kontaktflächen der Lippe mit der Scheibe
- (10): Spacer

## Patentansprüche

1. Dichtung (I) mit Sprühfunktion für Fahrzeugscheiben mindestens umfassend:
a. eine Profilleiste (1) umfassend einen Profilkörper (1a) und eine mit dem Profilkörper (1a) verbundene Lippe (1b),
b. einen Profilkörperkanal (3) innerhalb des Profilkörpers (1a),
c. eine Lippenöffnung (2) an der oberen Seite der Lippe (1b) und einen Verbindungskanal (4) zwischen der Lippenöffnung (2) und dem Profilkörperkanal (3), **dadurch gekennzeichnet, dass** der Profilkörperkanal (3) einen Durchmesser von 1 mm bis 5 mm aufweist und die Profilleiste (1) einen maximalen Durchmesser von 5 mm bis 20 mm, bevorzugt 10 mm bis 15 mm aufweist und dass die Profilleiste (1) einen Spacer (10) aufweist.

2. Dichtung (I) nach Anspruch 1, wobei die Profilleiste (1) Polyurethane, Polyolefine, Polysulfide, Polyepoxide und Kautschuk wie Naturkautschuk, Silikone wie RTV(raumtemperturvernetzenden-Silikonkautschuk, HTV-(hochtemperturvernetzenden) Silikonkautschuk, peroxidischvernetzten-Silikonkautschuk und/oder additionsvernetzten-Silikonkautschuk, Polyacrylate und/oder Thermoplastische Elastomere enthält.

3. Dichtung (I) nach Anspruch 2, wobei die Profilleiste (1) Thermoplastische Elastomere, bevorzugt TPE-U (Thermoplastische Elastomere auf Polyurethanbasis), TPE-O (Thermoplastische Elastomere auf Olefinbasis), TPE-V (Thermoplastische Elastomere auf Olefinbasis, vernetzt), TPE-E (Thermoplastische Polyesterelastomere), TPE-A (Thermoplastische Copolyamide), TPE-S (Styrol-Blockcopolymere), Styrol-Butadien-Kautschuk, Butadien-Acrylnitril-Kautschuk und/oder Ethylen-Propylen-Dien-Kautschuk, besonders bevorzugt Styrol/Butadien-Blockcopolymere (SBS) enthält.

4. Dichtung (I) nach einem der Ansprüche 1 bis 3, wobei die Lippenöffnung (2) einen Durchmesser von 0,5 mm bis 2 mm aufweist.

5. Fahrzeugscheibe umfassend eine Scheibe (5) mit einer am Rand der Scheibe (5) befestigten Dichtung (I) nach einem der Ansprüche 1 bis 4 und einem an der Dichtung (I) befestigten Schlauch (6).

6. Fahrzeugscheibe nach Anspruch 5, wobei die Dichtung (I) den gesamten Rand der Scheibe (5) umschließt.

7. Fahrzeugscheibe nach Anspruch 5 oder 6, wobei der Schlauch (6) mit einer Spülflüssigkeitssteuerung (7) verbunden ist.

8. Verfahren zur Herstellung einer Scheibe mit einer Dichtung nach einem der Ansprüche 1 bis 4 wobei
a. die Profilleiste einen Spacer aufweist und in die Profilleiste (1) die Lippenöffnung (2) und der Verbindungskanal (4) zwischen der Lippenöffnung (2) und dem Profilkörperkanal (3) ausgestochen werden,
b. die erhaltene Profilleiste (1) an eine Scheibe (5) extrudiert wird und
c. der Profilkörperkanal (3) mit einem Schlauch (6) verbunden wird.

9. Verfahren nach Anspruch 8, wobei die Lippenöffnung (2) und der Verbindungskanal (4) mit einem heißen Draht ausgestochen werden.

10. Verfahren nach Anspruch 8 oder 9, wobei vor Schritt a. ein Cleaner und/oder Primer auf der Scheibe (5) aufgetragen wird.

11. Verfahren nach einem der Ansprüche 8 bis 10, wobei der Profilkörperkanal (3) auf der dem Schlauch (6) abgewandten Seite mit einem Stopfen (9) verschlossen wird.

12. Verwendung der Dichtung (I) nach einem der Ansprüche 1 bis 4 in Scheiben von Fahrzeugen, Zügen, Schiffen, Hubschraubern und Flugzeugen, bevorzugt in Kraftfahrzeugen und Lastkraftwagen.

## Claims

1. Gasket (I) with spray function for motor vehicle windows comprising at least:
a. a profile strip (1) comprising a profile body (Ia) and a lip (1 b) connected to the profile body (Ia),
b. a profile body channel (3) inside the profile body (Ia),
c. a lip opening (2) on the upper side of the lip (Ib) and a connecting channel (4) between the lip opening (2) and the profile body channel (3), **characterized in that** the profile body channel (3) has a diameter of 1 mm to 5 mm and the profile strip (1) has a maximum diameter of 5 mm to 20 mm, preferably 10 mm to 15 mm, and that the profile strip (1) has a spacer (10).

2. Gasket (I) according to claim 1, wherein the profile strip (1) contains polyurethanes, polyolefins, polysulfides, polyepoxides, and rubber such as natural rubber, silicone such as RTV(room temperature vulcanizing) silicone rubber, HTV (high temperature vulcanizing) silicone rubber, peroxide vulcanizing silicone rubber, and/or addition vulcanizing silicone rubber, polyacrylates and/or thermoplastic elastomers.

3. Gasket (I) according to claim 2, wherein the profile strip (1) contains thermoplastic elastomers, preferably TPE-U (polyurethane-based thermoplastic elastomers), TPE-O (olefin-based thermoplastic elastomers), TPE-V (cross-linked olefin-based thermoplastic elastomers), TPE-E (thermoplastic polyester elastomers), TPE-A (thermoplastic co-polyamides), TPE-S (styrene block copolymers), styrene butadiene rubber, butadiene acrylonitrile rubber, and/or ethylene propylene diene rubber, particularly preferably styrene/butadiene block copolymers (SBS).

4. Gasket (I) according to one of claims 1 through 3, wherein the lip opening (2) has a diameter of 0.5 mm to 2 mm.

5. Motor vehicle window pane comprising a pane (5) with a gasket (I) affixed on the edge of the pane (5) according to one of claims 1 through 4 and a hose (6) secured to the gasket (I).

6. Motor vehicle window pane according to claim 5, wherein the gasket (I) encloses the entire edge of the pane (5).

7. Motor vehicle window pane according to claims 5 or 6, wherein the hose (6) is connected to a washer fluid controller (7).

8. Method for producing a window pane with a gasket according to one of claims 1 through 4, wherein
a. the profile strip has a spacer and the lip opening (2) and the connecting channel (4) are cut out in the profile strip (1) between the lip opening (2) and the profile body channel (3),
b. the profile strip (1) obtained is extruded onto a window pane (5), and
c. the profile body channel (3) is connected to a hose (6).

9. Method according to claim 8, wherein the lip opening (2) and the connecting channel (4) are cut out with a hot wire.

10. Method according to claim 8 or 9, wherein, before Step a., a cleaner and/or primer is applied on the pane (5).

11. Method according to one of claims 8 through 10, wherein the profile body channel (3) is closed with a stopper (9) on the side facing away from the hose (6).

12. Use of the gasket (I) according to one of claims 1 through 4 in windows of vehicles, trains, ships, helicopters, and airplanes, preferably in automobiles and trucks.

## Revendications

1. Joint (I) à fonction de pulvérisation pour vitres de véhicules, comprenant au moins :
a. une languette de profilé (1) qui comprend un corps de profilé (1a) et une lèvre (1 b) solidaire du corps de profilé (1a) ;
b. un canal (3) de corps de profilé à l'intérieur du corps de profilé (1a) ;
c. une ouverture de lèvre (2) sur le côté supérieur de la lèvre (1b) et un canal de liaison (4) entre l'ouverture de lèvre (2) et le canal (3) du corps de profilé,
**caractérisé par le fait que** le canal (3) du corps de profilé présente un diamètre de 1 mm à 5 mm et la languette de profilé (1) présente un diamètre maximum de 5 mm à 20 mm, de préférence de 10 mm à 15 mm, et **par le fait que** la languette de profilé (1) présente un espaceur (10).

2. Joint (I) selon la revendication 1, dans lequel la languette de profilé (1) contient des polyuréthanes, polyoléfines, polysulfures, polyépoxydes et du caoutchouc comme le caoutchouc naturel, des silicones comme le caoutchouc de silicone RTV (réticulant à la température ambiante), le caoutchouc de silicone HTV (réticulant à haute température), le caoutchouc de silicone réticulé par peroxyde et/ou le caoutchouc de silicone réticulé par addition, des polyacrylates et/ou des élastomères thermoplastiques.

3. Joint (I) selon la revendication 2, dans lequel la languette de profilé (1) contient des élastomères thermoplastiques, de préférence des TPE-U (élastomères thermoplastiques à base de polyuréthane), des TPE-O (élastomères thermoplastiques à base d'oléfines), des TPE-V (élastomères thermoplastiques à base d'oléfines, réticulés), des TPE-E (élastomères polyesters thermoplastiques), des TPE-A (copolyamides thermoplastiques), des TPE-S (copolymères à blocs de styrène), du caoutchouc styrène-butadiène, du caoutchouc butadiène-acrylonitrile et/ou du caoutchouc éthylène-propylène-diène, dans une mesure particulièrement préférée, des copolymères à blocs de styrène/butadiène (SBS).

4. Joint (I) selon l'une des revendications 1 à 3, dans lequel l'ouverture de lèvre (2) présente un diamètre de 0,5 mm à 2 mm.

5. Vitre de véhicule comprenant une vitre (5) munie d'un joint (I) selon l'une des revendications 1 à 4, fixé au bord de la vitre (5) et d'un tuyau (6) fixé au joint (I).

6. Vitre de véhicule selon la revendication 5, dans laquelle le joint (I) entoure la totalité du bord de la vitre (5).

7. Vitre de véhicule selon l'une des revendications 5 ou 6, dans laquelle le tuyau (6) est relié à une commande de liquide de lavage (7).

8. Procédé de fabrication d'une vitre munie d'un joint selon une des revendications 1 à 4, dans lequel
a. la languette de profilé présente un espaceur et l'ouverture de lèvre (2) et le canal de liaison (4) sont percés dans la languette de profilé (1), entre l'ouverture de lèvre (2) et le canal (3) du corps de profilé ;
b. la languette de profilé (1) obtenue est extrudée contre une vitre (5) ; et
c. le canal (3) du corps de profilé est relié à un tuyau (6).

9. Procédé selon la revendication 8, dans lequel l'ouverture de lèvre (2) et le canal de liaison (4) sont percés au moyen d'un fil chaud.

10. Procédé selon l'une des revendications 8 ou 9, dans lequel, avant l'étape a., un agent nettoyant et/ou un primaire est ou sont appliqué(s) sur la vitre (5).

11. Procédé selon l'une des revendications 8 à 10, dans lequel le canal (3) du corps de profilé est obturé au moyen d'un bouchon (9) sur le côté qui est éloigné du tuyau (6).

12. Utilisation du joint (1) selon l'une des revendications 1 à 4, dans des vitres de véhicules, trains, navires, hélicoptères et avions, de préférence dans des véhicules automobiles et des camions.
